# FASCICULE DE BREVET EUROPEEN

(11) **EP 4 183 690 B1**
(45) Date de publication et mention de la délivrance du brevet: **14.08.2024**
(21) Numéro de dépôt: 22207675.4
(22) Date de dépôt: 16.11.2022
(51) Int. Cl.: B64D 27/40

(54) **MAT RÉACTEUR POUR COUPLER UN TURBORÉACTEUR À UNE AILE D'UN AÉRONEF**
TRIEBWERKSMAST ZUR KOPPLUNG EINES STRAHLTRIEBWERKS AN EINEN FLÜGEL EINES FLUGZEUGS
JET ENGINE PYLON FOR COUPLING A JET ENGINE TO A WING OF AN AIRCRAFT

(30) Priorité: 19.11.2021 FR 2112256
(43) Date de publication de la demande: 24.05.2023
(73) Titulaire: AIRBUS OPERATIONS, 31060 Toulouse Cedex 9 (FR)
(72) Inventeur: PAUTIS, Olivier, 31060 TOULOUSE (FR); BLANC, Jonathan, 31060 TOULOUSE (FR)
(74) Mandataire: Cabinet Le Guen Maillet

(56) Documents cités:
- FR-A1- 3 042 778
- FR-A1- 3 069 527
- FR-A1- 3 072 364
- FR-A1- 3 099 464
- US-B2- 9 248 921
- ANONYMOUS: "Pylon bracket", 9 June 2013 (2013-06-09), pages 1 - 2, XP055925485, Retrieved from the Internet <URL:https://www.sandvik.coromant.com/en-gb/industrysolutions/aerospace/titanium/pages/pylon-bracket.aspx> [retrieved on 20220527]

## Description

### DOMAINE TECHNIQUE

La présente invention concerne un mât réacteur pour monter un turboréacteur sous l'aile d'un aéronef, ainsi qu'un aéronef comportant un turboréacteur, une aile et un tel mât réacteur pour monter le turboréacteur sous l'aile.

### ÉTAT DE LA TECHNIQUE ANTÉRIEURE

Habituellement, pour un aéronef, un ensemble de propulsion comporte un turboréacteur qui est fixé sous une aile de l'aéronef à l'aide d'un mât réacteur.

Des premiers moyens de liaison fixent le turboréacteur au mât réacteur. Ces moyens de liaison comprennent classiquement une attache moteur avant, une attache moteur arrière et des bielles de reprise qui absorbent les forces de poussée générées par le turboréacteur.

Des deuxièmes moyens de liaison fixent le mât réacteur à l'aile. Ces deuxièmes moyens de liaison réagissent et absorbent les moments de flexion et les efforts tranchants à l'interface du mât réacteur avec l'aile. Un exemple d'un tel arrangement est décrit dans le document US-A-2016/0221682. Un autre example d'un mât réacteur est décrit dans le document FR3069527 A1.

Selon un mode de réalisation de l'état de la technique, le mât réacteur est constitué d'une structure primaire qui permet le transfert des efforts et qui est formée d'un caisson constitué d'un longeron supérieur, d'un longeron inférieur et de deux panneaux latéraux reliant les deux longerons et de nervures internes réparties le long du caisson. La réalisation du caisson consiste alors à réaliser quatre lignes d'éclissage, à savoir, une ligne entre le longeron supérieur et chaque panneau latéral et une ligne entre le longeron inférieur et chaque panneau latéral.

Selon un autre mode de réalisation de l'état de la technique, le mât réacteur est constitué d'une structure primaire formée d'un caisson constitué d'un longeron supérieur, d'un longeron inférieur et de deux panneaux latéraux reliant les deux longerons, de nervures internes réparties le long du caisson et de quatre cornières réparties aux quatre coins du caisson. La réalisation du caisson consiste alors à réaliser huit lignes d'éclissage, à savoir, deux lignes par cornière.

La structure primaire est recouverte d'une structure secondaire qui forme un capotage extérieur présentant une surface extérieure aérodynamique et sous lequel peuvent être installés des systèmes (carburant, électrique, huile, ...).

Même si de telles installations donnent satisfaction, elles sont relativement lourdes car tous les éléments sont en métal et le processus d'assemblage est complexe avec un empilement de plusieurs couches et séquentiel avec l'assemblage des pièces les unes après les autres.

### EXPOSÉ DE L'INVENTION

Un objet de la présente invention est de proposer un mât réacteur pour monter un turboréacteur sous l'aile d'un aéronef où le mât réacteur présente un assemblage particulier permettant un gain de poids et de temps pour l'assemblage.

À cet effet, est proposé un mât réacteur pour le montage d'un turboréacteur sous une aile d'un aéronef, le mât réacteur comportant :
- un longeron supérieur présentant un profil en U inversé avec un toit et deux parois latérales qui s'étendent depuis le toit vers le bas,
- un longeron inférieur présentant un profil en U avec un fond et deux parois latérales qui s'étendent depuis le fond vers le haut, où chaque paroi latérale d'un longeron présente une extrémité libre qui s'étend jusqu'à venir au voisinage de l'extrémité libre de la paroi latérale de l'autre longeron,
- des moyens de fixation qui assurent la fixation de l'extrémité libre d'une paroi latérale d'un longeron avec l'extrémité libre de la paroi latérale de l'autre longeron, et
- une pluralité de nervures réparties sur la longueur du longeron inférieur et logées entre le longeron supérieur et le longeron inférieur, où chaque nervure présente une tête fixée à chaque paroi latérale du longeron supérieur et un pied fixé au longeron inférieur,
le mât réacteur étant caractérisé en ce qu'il comporte pour chaque nervure, un sabot logé dans le longeron inférieur et solidaire de ce dernier, et chaque sabot présente une paroi transversale qui s'étend transversalement par rapport au longeron inférieur et qui présente une zone de fixation au niveau de laquelle se fixe le pied de la nervure associée.

Un tel mât réacteur présente ainsi un nombre de pièces réduit et une seule ligne de fixation par côté permettant un gain de poids et de temps pour l'assemblage.

Avantageusement, la zone de fixation prend la forme d'un évidement de la paroi transversale dans lequel loge le pied de la nervure associée.

Avantageusement, la tête comporte une âme qui s'étend transversalement par rapport au longeron supérieur et de part et d'autre de l'âme, une semelle solidaire de l'âme, et chaque semelle est en appui contre une face interne d'une paroi latérale du longeron supérieur et fixée à ladite paroi latérale.

Avantageusement, le longeron inférieur et les sabots sont réalisés en métal et le longeron supérieur est réalisé en matériaux composites.

Avantageusement, le longeron supérieur est conformé pour réaliser un capotage extérieur aérodynamique.

Selon un mode de réalisation particulier, une face interne de l'extrémité libre de chaque paroi latérale du longeron supérieur est en appui contre une face externe de l'extrémité libre d'une paroi latérale du longeron inférieur, au niveau où une paroi latérale du longeron supérieur se superpose à une paroi latérale du longeron inférieur, les parois latérales sont traversées par des alésages traversants coaxiaux, et les moyens de fixation comportent pour chaque paire d'alésages traversants coaxiaux, une fixation à tige qui présente une tige qui s'insère dans lesdits alésages traversants et une tête à chaque extrémité de la tige pour prendre en sandwich les parois latérales.

Selon un mode de réalisation particulier, l'extrémité libre de chaque paroi latérale du longeron supérieur est placée bout à bout avec l'extrémité libre d'une paroi latérale du longeron inférieur, l'extrémité libre de chaque paroi latérale est traversée par des alésages traversants, les moyens de fixation comportent, d'une part, pour chaque paire de parois latérales mises bout à bout, une éclisse placée contre une face externe de chaque paroi latérale de la paire, où chaque éclisse présente pour chaque alésage traversant de la paire associée, un alésage traversant complémentaire coaxial avec ledit alésage traversant, et, d'autre part, pour chaque alésage traversant, une fixation à tige qui présente une tige qui s'insère dans l'alésage traversant et l'alésage traversant complémentaire coaxial et une tête à chaque extrémité de la tige pour prendre en sandwich l'éclisse et la paroi latérale associées.

Selon un mode de réalisation particulier, l'extrémité libre de chaque paroi latérale du longeron inférieur présente une pluralité de logements où chacun présente une paroi de contact globalement perpendiculaire à la paroi latérale associée du longeron supérieur, la tranche de l'extrémité libre de chaque paroi latérale est placée contre les parois de contact des logements associés, chaque paroi de contact présente un alésage traversant dont l'axe est globalement parallèle à la paroi latérale associée du longeron supérieur, pour chaque alésage traversant, la paroi latérale associée du longeron supérieur présente un premier alésage dont l'axe est perpendiculaire à l'axe dudit alésage traversant et un deuxième alésage coaxial avec ledit alésage traversant et débouchant dans le premier alésage, et les moyens de fixation comportent, pour chaque alésage traversant, un écrou à manchon logé dans le premier alésage et une vis dont la tige traverse successivement l'alésage traversant, le deuxième alésage coaxial pour se visser dans l'écrou à manchon du premier alésage associé.

L'invention propose également un aéronef comportant une aile, un turboréacteur et un mât réacteur selon l'une des variantes précédentes, fixé entre l'aile et le turboréacteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue de côté d'un mât réacteur selon l'invention et assemblé entre une aile et un turboréacteur,
Fig. 3 est une vue en coupe par la ligne III-III du mât réacteur de la Fig. 2,
Fig. 4 est une vue éclatée d'un longeron inférieur et d'une nervure selon l'invention,
Fig. 5 est une vue du détail d'assemblage V de la Fig. 3 selon un premier mode de réalisation de l'invention,
Fig. 6 est une vue du détail d'assemblage V de la Fig. 3 selon un deuxième mode de réalisation de l'invention, et
Fig. 7 est une vue du détail d'assemblage V de la Fig. 3 selon un troisième mode de réalisation de l'invention.

### EXPOSÉ DÉTAILLÉ DE MODES DE RÉALISATION

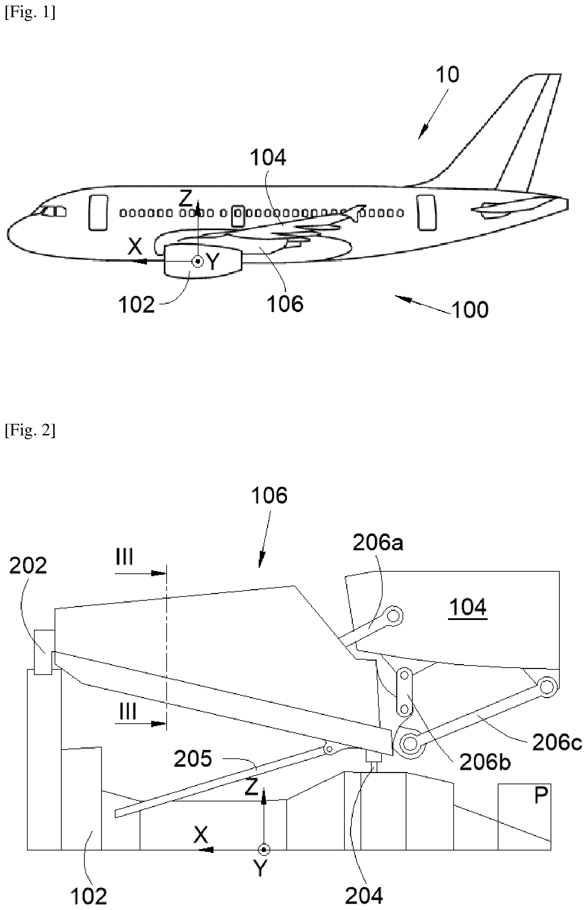

La Fig. 1 montre un aéronef 10 qui comporte un système de propulsion 100 avec un turboréacteur 102 fixé à une aile 104 de l'aéronef 10 par l'intermédiaire d'un mât réacteur 106 selon l'invention.

Dans la description qui suit, les termes relatifs à une position sont pris en référence à un aéronef en position normale de vol, c'est-à-dire comme il est représenté sur la Fig. 1 et les positions « avant » et « arrière » sont prises par rapport à l'avant et l'arrière du turboréacteur et par rapport à la direction d'avancement de l'aéronef 10 lorsque le turboréacteur 102 fonctionne.

Dans la description qui suit, et par convention, on appelle X la direction longitudinale du turboréacteur qui est parallèle à l'axe longitudinal dudit turboréacteur, on appelle Y la direction transversale qui est horizontale lorsque l'aéronef est au sol, et Z la direction verticale qui est verticale lorsque l'aéronef est au sol, ces trois directions X, Y et Z étant orthogonales entre elles.

Le turboréacteur 102 présente une forme de révolution autour de son axe longitudinal et est entouré d'une nacelle constituée de panneaux formant une surface extérieure aérodynamique. De la même manière, l'aile 104 présente une structure entourée d'une peau formant une surface extérieure aérodynamique.

Le mât réacteur 106 forme une structure rigide.

La Fig. 2 montre un exemple d'installation du mât réacteur 106 selon l'invention et sans les capots extérieurs entre l'aile 104 sans la peau et le turboréacteur 102 sans la nacelle.

Le mât réacteur 106 prend la forme d'un caisson qui est fixé entre le turboréacteur 102 et l'aile 104.

Dans le mode de réalisation de l'invention présenté ici, la fixation du mât réacteur 106 au turboréacteur 102 est réalisée par des premiers moyens de liaison comportant une attache moteur avant 202, une attache moteur arrière 204 et des bielles de reprise 205 qui absorbent les forces de poussée générées par le turboréacteur.

Dans le mode de réalisation de l'invention présenté ici, la fixation du mât réacteur 106 à l'aile 104 est réalisée par des deuxièmes moyens de liaison comportant un jeu de bielles 206a-c.

Ces moyens de liaison sont donnés ici à titre d'exemple et peuvent prendre d'autres formes connues de l'homme du métier.

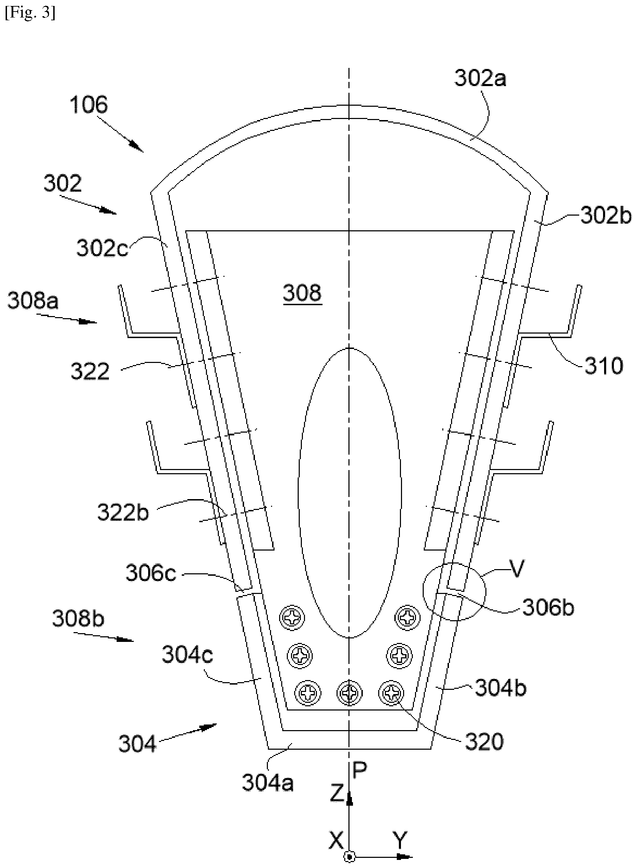

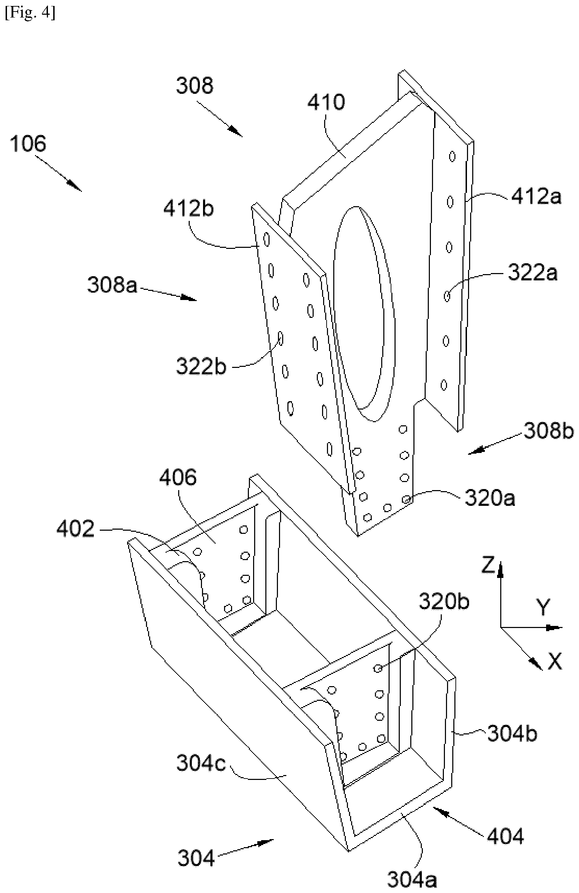

La Fig. 3 montre le mât réacteur 106 et la Fig. 4 montre certains des composants permettant de réaliser le mât réacteur 106.

Le mât réacteur 106 prend la forme d'un caisson et il comporte un plan médian longitudinal P parallèle au plan XZ et passant par l'axe longitudinal X du turboréacteur 102.

Le mât réacteur 106 comporte un longeron supérieur 302 s'étendant globalement parallèlement à la direction longitudinale X et présentant dans un plan perpendiculaire à la direction longitudinale X, un profil en U inversé avec un toit 302a et deux parois latérales 302b-c qui s'étendent depuis le toit 302a vers le bas de part et d'autre du plan médian longitudinal P. Il y a ainsi une paroi latérale bâbord 302b et une paroi latérale tribord 302c.

Le mât réacteur 106 comporte un longeron inférieur 304 s'étendant globalement parallèlement à la direction longitudinale X et présentant dans un plan perpendiculaire à la direction longitudinale X, un profil en U avec un fond 304a et deux parois latérales 304b-c qui s'étendent depuis le fond 304a vers le haut de part et d'autre du plan médian longitudinal P. Il y a ainsi une paroi latérale bâbord 304b et une paroi latérale tribord 304c.

Chaque paroi latérale 302b-c, 304b-c d'un longeron 302, 304 présente une extrémité libre qui s'étend jusqu'à venir au voisinage de l'extrémité libre de la paroi latérale 304b-c, 302b-c de l'autre longeron 304, 302.

Le mât réacteur 106 comporte également des moyens de fixation qui assurent la fixation de l'extrémité libre d'une paroi latérale 302b-c, 304b-c d'un longeron 302, 304 avec l'extrémité libre de la paroi latérale 304b-c, 302b-c de l'autre longeron 304, 302.

Ainsi l'extrémité libre de la paroi latérale bâbord 302b, respectivement tribord 302c, du longeron supérieur 302 est fixée à la paroi latérale bâbord 304b, respectivement tribord 304c, du longeron inférieur 304.

Il y a donc une ligne de fixation par côté, soit une première ligne de fixation 306b pour fixer les extrémités libres des parois latérales respectives 302b et 304b et une deuxième ligne de fixation 306c pour fixer les extrémités libres des parois latérales respectives 302c et 304c des longerons 302 et 304 l'un avec l'autre nécessitant un nombre réduit de moyens de fixation.

Le mât réacteur 106 comporte également une pluralité de nervures 308 qui sont logées dans le caisson formé par le longeron supérieur 302 et le longeron inférieur 304 et qui sont réparties sur la longueur du longeron inférieur 304.

Chaque nervure 308 présente une tête 308a qui est fixée à chaque paroi latérale 302b-c du longeron supérieur 302 et un pied 308b fixé au longeron inférieur 304.

Les nervures 308 relient le longeron supérieur 302 et le longeron inférieur 304 par plusieurs plans de liaison verticaux distribués sur la longueur des longerons 302 et 304 et assurent la stabilité du mât réacteur 106 et le transfert des efforts de torsion (Mx).

Un tel mât réacteur 106 présente ainsi un nombre de pièces réduit et une seule ligne de fixation par côté permettant un gain de poids et de temps pour l'assemblage.

La Fig. 4 montre une vue éclatée du longeron inférieur 304 et d'une nervure 308.

Le mât réacteur 106 comporte pour chaque nervure 308, un sabot 402 logé dans le longeron inférieur 304 et solidaire de ce dernier. Le longeron inférieur 304 et le sabot 402 peuvent être une seule et même pièce ou deux pièces fixées l'une à l'autre.

Du fait que les nervures 308 sont réparties sur la longueur du longeron inférieur 304, il y a également plusieurs sabots 402 répartis sur la longueur du longeron inférieur 304.

Dans le mode de réalisation de l'invention présenté sur les Figs. 3 et 4, chaque sabot 402 présente une paroi transversale 406 qui s'étend transversalement par rapport au longeron inférieur 304, c'est-à-dire perpendiculairement à la direction longitudinale X. La paroi transversale 406 présente une zone de fixation 404 au niveau de laquelle se fixe le pied 308b de la nervure 308 associée.

Dans le mode de réalisation de l'invention présenté sur la Fig. 4, la zone de fixation 404 prend la forme d'un évidement de la paroi transversale 406 dans lequel loge le pied 308b de la nervure 308 associée, mais dans un autre mode de réalisation non représenté, la paroi transversale 406 peut-être plane et la zone de fixation 404 est alors la surface plane de la paroi transversale 406. Dans le mode de réalisation de l'invention présenté sur les Figs. 3 et 4, la fixation du pied 308b de la nervure 308 est réalisée par des boulons ou des rivets 320 à travers des alésages 320a-b parallèles à la direction longitudinale X prévus à cet effet à travers le pied 308b de la nervure 308 et dans la paroi transversale 406.

Dans le mode de réalisation de l'invention présenté aux Figs. 3 et 4, la tête 308a de la nervure 308 comporte une âme 410 qui s'étend transversalement par rapport au longeron supérieur 302, c'est-à-dire perpendiculairement à la direction longitudinale X, et de part et d'autre de l'âme 410 par rapport au plan médian longitudinal P, une semelle 412a-b solidaire de l'âme 410 et chaque semelle 412a-b est en appui contre la face interne d'une paroi latérale 302b-c du longeron supérieur 302 et fixée à ladite paroi latérale 302b-c.

Dans le mode de réalisation de l'invention présenté sur les Fig. 3 et 4, la fixation de chaque semelle 412a-b est réalisée par des boulons ou des rivets 322 à travers des alésages 322a-b perpendiculaires à la paroi latérale 302b-c considérée et prévus à cet effet dans la semelle 412a-b et la paroi latérale 302b-c du longeron supérieur 302.

Du fait de la présence du turboréacteur 102 sous le longeron inférieur 304 et les sabots 402, ces derniers sont soumis à de très fortes températures. Pour pouvoir supporter ces températures, le longeron inférieur 304 et les sabots 402 doivent être réalisés dans un matériau résistant à ces hautes températures et, de préférence, ils sont réalisés en métal.

De la même manière, les nervures 308 sont de préférence en métal pour résister aux hautes températures au voisinage des pieds 308b et pour résister aux efforts qui les traversent.

À l'inverse, le longeron supérieur 302 est soumis à des températures moindres, et il est donc possible de réaliser le longeron supérieur 302 dans un matériau moins lourd et il est réalisé par exemple en matériaux composites, comme le CFRP (matériau en polymère renforcé de fibres de carbone).

Une telle structure permet un allègement du mât réacteur 106.

Du fait de sa structure en matériaux composites, il est possible de donner une forme complexe au longeron supérieur 302. Une telle forme complexe permet de réaliser un capotage extérieur aérodynamique qui présente une surface extérieure aérodynamique et qui forme le capotage extérieur du mât réacteur 106 assurant la liaison entre la nacelle du turboréacteur 102 et la peau de l'aile 104, contrairement à l'état de la technique, où un capotage extérieur complémentaire est nécessaire.

Le longeron supérieur 302 assure ainsi les fonctions de la structure primaire, visant à transporter les efforts, ainsi que celles de la structure secondaire, visant à habiller aérodynamiquement la structure primaire à y loger les systèmes.

Si le longeron supérieur 302 ne peut pas constituer le capotage extérieur aérodynamique, des agrafes 310 sont fixées à l'extérieur de chaque paroi latérale 302b-c du longeron supérieur 302 pour y fixer un capotage extérieur aérodynamique supplémentaire (non représenté sur les figures).

Un procédé d'assemblage permet de réaliser deux modules qui sont ensuite fixés l'un à l'autre le long des lignes de fixation 306b-c, ce qui permet un assemblage simple et rapide.

Un premier module est constitué du longeron supérieur 302 et des éventuelles agrafes 310 et un deuxième module est constitué du longeron inférieur 304 et des nervures 308 fixées par leurs pieds 308b.

Les deux modules sont alors fixés par mise en place des moyens de fixation et la fixation de la tête 308a des nervures 308 au longeron supérieur 302.

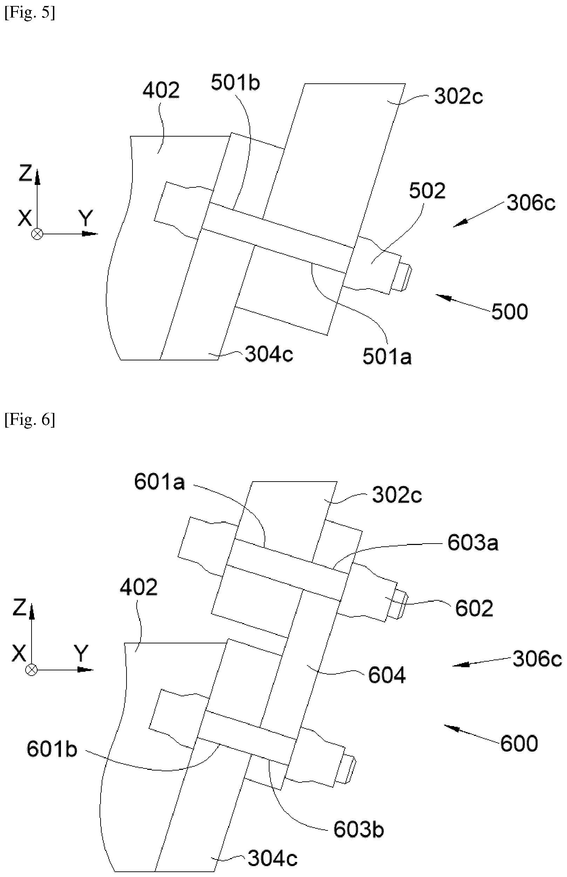

Les Figs. 5 à 7 montrent différents modes de réalisation des moyens de fixation au niveau de la ligne de fixation 306c (identique pour les deux lignes de fixation 306b-c).

Dans le mode de réalisation de la Fig. 5, une face interne de l'extrémité libre de chaque paroi latérale 302b-c du longeron supérieur 302 est en appui contre une face externe de l'extrémité libre d'une paroi latérale 304b-c du longeron inférieur 304. La face interne est la face orientée vers l'intérieur du mât réacteur 106 et la face externe est la face orientée vers l'extérieur du mât réacteur 106.

Au niveau où une paroi latérale 302b-c du longeron supérieur 302 se superpose à une paroi latérale 304b-c du longeron inférieur 304, lesdites parois latérales 302b-c et 304b-c sont traversées par des alésages traversants 501a-b coaxiaux répartis sur la longueur des longerons 302 et 304.

Les moyens de fixation 500 comportent pour chaque paire d'alésages traversants 501a-b coaxiaux, une fixation à tige 502 qui présente une tige qui s'insère dans lesdits alésages traversants 501a-b et une tête à chaque extrémité de la tige pour prendre en sandwich les parois latérales 302b-c et 304b-c. Les fixations à tige 502 sont par exemple des boulons ou des rivets. La prise en sandwich s'effectue entre la tête de la vis et l'écrou dans le cas d'un boulon ou entre la tête et la contre-tête dans le cas d'un rivet.

Dans le mode de réalisation de la Fig. 6, l'extrémité libre de chaque paroi latérale 302b-c du longeron supérieur 302 est placée bout à bout avec l'extrémité libre d'une paroi latérale 304b-c du longeron inférieur 304.

L'extrémité libre de chaque paroi latérale 302b-c, 304b-c est traversée par des alésages traversants 601a-b répartis sur la longueur du longeron 302, 304.

Les moyens de fixation 600 comportent pour chaque paire de parois latérales 302b-c, 304b-c mises bout à bout, une éclisse 604 qui est placée contre une face externe de chaque paroi latérale 302b-c, 304b-c de la paire. La face externe est la face orientée vers l'extérieur du mât réacteur 106.

Chaque éclisse 604 présente pour chaque alésage traversant 601a-b de la paire associée, un alésage traversant complémentaire 603a-b coaxial avec ledit alésage traversant 601a-b.

Les moyens de fixation 600 comportent pour chaque alésage traversant 601a-b, une fixation à tige 602 qui présente une tige qui s'insère dans l'alésage traversant 601a-b et l' alésage traversant complémentaire 603a-b coaxial et une tête à chaque extrémité de la tige pour prendre en sandwich l'éclisse 604 et la paroi latérale 302b-c, 304b-c associées. Les fixations à tige 602 sont par exemple des boulons ou des rivets. La prise en sandwich s'effectue entre la tête de la vis et l'écrou dans le cas d'un boulon ou entre la tête et la contre-tête dans le cas d'un rivet.

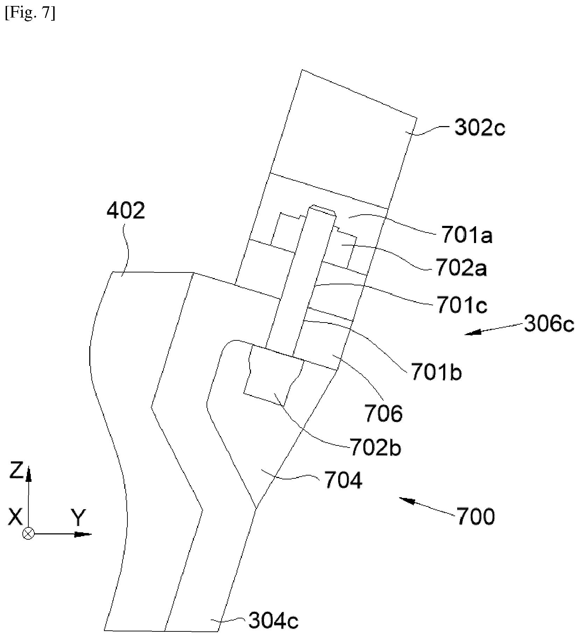

Dans le mode de réalisation de la Fig. 7, l'extrémité libre de chaque paroi latérale 304b-c du longeron inférieur 304 présente une pluralité de logements 704 répartis sur la longueur du longeron inférieur 304 où chaque logement 704 présente une paroi de contact 706 qui est globalement perpendiculaire à la paroi latérale 302b-c associée du longeron supérieur 302, c'est-à-dire qui est du même côté, et qui constitue l'extrémité libre du longeron inférieur 304.

La tranche de l'extrémité libre de chaque paroi latérale 302b-c du longeron supérieur 302 est placée contre les parois de contact 706 des logements 704 associés.

Chaque paroi de contact 706 présente un alésage traversant 701b dont l'axe est globalement parallèle à la paroi latérale 302b-c associée du longeron supérieur 302.

Pour chaque alésage traversant 701b, la paroi latérale 302b-c associée du longeron supérieur 302 présente un premier alésage 701a dont l'axe est perpendiculaire à l'axe dudit alésage traversant 701b et un deuxième alésage 701c coaxial avec ledit alésage traversant 701b et débouchant dans le premier alésage 701a.

Les moyens de fixation 700 comportent pour chaque alésage traversant 701b, un écrou à manchon 702a (également appelé écrou à portée cylindrique ou écrou barillet) logé dans le premier alésage 701a et une vis 702b dont la tige traverse successivement l'alésage traversant 701b, le deuxième alésage 701c coaxial pour se visser dans l'écrou à manchon 702a du premier alésage 701a associé.

La paroi de contact 706 et la paroi latérale 302b-c du longeron supérieur 302 sont ainsi prises en sandwich entre la tête de la vis 702b et l'écrou à manchon 702a qui coopèrent.

## Revendications

1. Mât réacteur (106) pour le montage d'un turboréacteur (102) sous une aile (104) d'un aéronef (10), le mât réacteur (106) comportant :
- un longeron supérieur (302) présentant un profil en U inversé avec un toit (302a) et deux parois latérales (302b-c) qui s'étendent depuis le toit (302a) vers le bas,
- un longeron inférieur (304) présentant un profil en U avec un fond (304a) et deux parois latérales (304b-c) qui s'étendent depuis le fond (304a) vers le haut, où chaque paroi latérale (302b-c, 304b-c) d'un longeron (302, 304) présente une extrémité libre qui s'étend jusqu'à venir au voisinage de l'extrémité libre de la paroi latérale (304b-c, 302b-c) de l'autre longeron (304, 302),
- des moyens de fixation qui assurent la fixation de l'extrémité libre d'une paroi latérale (302b-c, 304b-c) d'un longeron (302, 304) avec l'extrémité libre de la paroi latérale (304b-c, 302b-c) de l'autre longeron (304, 302), et
- une pluralité de nervures (308) réparties sur la longueur du longeron inférieur (304) et logées entre le longeron supérieur (302) et le longeron inférieur (304), où chaque nervure (308) présente une tête (308a) fixée à chaque paroi latérale (302b-c) du longeron supérieur (302) et un pied (308b) fixé au longeron inférieur (304),
le mât réacteur (106) étant **caractérisé en ce qu'**il comporte pour chaque nervure (308), un sabot (402) logé dans le longeron inférieur (304) et solidaire de ce dernier, et **en ce que** chaque sabot (402) présente une paroi transversale (406) qui s' étend transversalement par rapport au longeron inférieur (304) et qui présente une zone de fixation (404) au niveau de laquelle se fixe le pied (308b) de la nervure (308) associée.

2. Mât réacteur (106) selon la revendication 1, **caractérisé en ce que** la zone de fixation (404) prend la forme d'un évidement de la paroi transversale (406) dans lequel loge le pied (308b) de la nervure (308) associée.

3. Mât réacteur (106) selon l'une des revendications 1 ou 2, **caractérisé en ce que** la tête (308a) comporte une âme (410) qui s'étend transversalement par rapport au longeron supérieur (302) et de part et d'autre de l'âme (410), une semelle (412a-b) solidaire de l'âme (410), et **en ce que** chaque semelle (412a-b) est en appui contre une face interne d'une paroi latérale (302b-c) du longeron supérieur (302) et fixée à ladite paroi latérale (302b-c).

4. Mât réacteur (106) selon l'une des revendications 1 à 3, **caractérisé en ce que** le longeron inférieur (304) et les sabots (402) sont réalisés en métal et **en ce que** le longeron supérieur (302) est réalisé en matériaux composites.

5. Mât réacteur (106) selon la revendication 4, **caractérisé en ce que** le longeron supérieur (302) est conformé pour réaliser un capotage extérieur aérodynamique.

6. Mât réacteur (106) selon l'une des revendications 1 à 5, **caractérisé en ce qu'**une face interne de l'extrémité libre de chaque paroi latérale (302b-c) du longeron supérieur (302) est en appui contre une face externe de l'extrémité libre d'une paroi latérale (304b-c) du longeron inférieur (304), **en ce qu'**au niveau où une paroi latérale (302b-c) du longeron supérieur (302) se superpose à une paroi latérale (304b-c) du longeron inférieur (304), les parois latérales (302b-c, 304b-c) sont traversées par des alésages traversants (501a-b) coaxiaux, et **en ce que** les moyens de fixation (500) comportent pour chaque paire d'alésages traversants (501a-b) coaxiaux, une fixation à tige (502) qui présente une tige qui s'insère dans lesdits alésages traversants (501a-b) et une tête à chaque extrémité de la tige pour prendre en sandwich les parois latérales (302b-c, 304b-c).

7. Mât réacteur (106) selon l'une des revendications 1 à 5, **caractérisé en ce que** l'extrémité libre de chaque paroi latérale (302b-c) du longeron supérieur (302) est placée bout à bout avec l'extrémité libre d'une paroi latérale (304b-c) du longeron inférieur (304), **en ce que** l'extrémité libre de chaque paroi latérale (302b-c, 304b-c) est traversée par des alésages traversants (601a-b), **en ce que** les moyens de fixation (600) comportent d'une part, pour chaque paire de parois latérales (302b-c, 304b-c) mises bout à bout, une éclisse (604) placée contre une face externe de chaque paroi latérale (302b-c, 304b-c) de la paire, où chaque éclisse (604) présente pour chaque alésage traversant (601a-b) de la paire associée, un alésage traversant complémentaire (603a-b) coaxial avec ledit alésage traversant (601a-b), et, d'autre part, pour chaque alésage traversant (601a-b), une fixation à tige (602) qui présente une tige qui s'insère dans l'alésage traversant (601a-b) et l'alésage traversant complémentaire (603a-b) coaxial et une tête à chaque extrémité de la tige pour prendre en sandwich l'éclisse (604) et la paroi latérale (302b-c, 304b-c) associées.

8. Mât réacteur (106) selon l'une des revendications 1 à 5, **caractérisé en ce que** l'extrémité libre de chaque paroi latérale (304b-c) du longeron inférieur (304) présente une pluralité de logements (704) où chacun présente une paroi de contact (706) globalement perpendiculaire à la paroi latérale (302b-c) associée du longeron supérieur (302), **en ce que** la tranche de l'extrémité libre de chaque paroi latérale (302b-c) est placée contre les parois de contact (706) des logements (704) associés, **en ce que** chaque paroi de contact (706) présente un alésage traversant (701b) dont l'axe est globalement parallèle à la paroi latérale (302b-c) associée du longeron supérieur (302), **en ce que** pour chaque alésage traversant (701b), la paroi latérale (302b-c) associée du longeron supérieur (302) présente un premier alésage (701a) dont l'axe est perpendiculaire à l'axe dudit alésage traversant (701b) et un deuxième alésage (701c) coaxial avec ledit alésage traversant (701b) et débouchant dans le premier alésage (701a), et **en ce que** les moyens de fixation (700) comportent pour chaque alésage traversant (701b), un écrou à manchon (702a) logé dans le premier alésage (701a) et une vis (702b) dont la tige traverse successivement l'alésage traversant (701b), le deuxième alésage (701c) coaxial pour se visser dans l'écrou à manchon (702a) du premier alésage (701a) associé.

9. Aéronef (10) comportant une aile (104), un turboréacteur (102) et un mât réacteur (106) selon l'une des revendications précédentes, fixé entre l'aile (104) et le turboréacteur (102).

## Patentansprüche

1. Triebwerkspylon (106) zur Anbringung eines Turbostrahltriebwerks (102) unter einem Tragflügel (104) eines Luftfahrzeugs (10), wobei der Triebwerkspylon (106) umfasst:
- einen oberen Holm (302), der ein umgekehrt U-förmiges Profil mit einem Dach (302a) und zwei Seitenwänden (302b-c), die sich vom Dach (302a) aus nach unten erstrecken, aufweist,
- einen unteren Holm (304), der ein U-förmiges Profil mit einem Boden (304a) und zwei Seitenwänden (304b-c), die sich vom Boden (304a) aus nach oben erstrecken, aufweist, wobei jede Seitenwand (302b-c, 304b-c) eines Holms (302, 304) ein freies Ende aufweist, das sich erstreckt, bis es in die Nähe des freien Endes der Seitenwand (304b-c, 302b-c) des anderen Holms (304, 302) kommt,
- Befestigungsmittel, welche die Befestigung des freien Endes einer Seitenwand (302b-c, 304b-c) eines Holms (302, 304) am freien Ende der Seitenwand (304b-c, 302b-c) des anderen Holms (304, 302) sicherstellen, und
- mehrere Rippen (308), die über die Länge des unteren Holms (304) verteilt sind und zwischen dem oberen Holm (302) und dem unteren Holm (304) aufgenommen sind, wobei jede Rippe (308) einen Kopf (308a), der an jeder Seitenwand (302b-c) des oberen Holms (302) befestigt ist, und einen Fuß (308b), der am unteren Holm (304) befestigt ist, aufweist,
wobei der Triebwerkspylon (106) **dadurch gekennzeichnet ist, dass** er für jede Rippe (308) einen Schuh (402) umfasst, der im unteren Holm (304) aufgenommen und mit diesem Letzteren fest verbunden ist, und dadurch, dass jeder Schuh (402) eine Querwand (406) aufweist, die sich quer bezüglich des unteren Holms (304) erstreckt und die einen Befestigungsbereich (404) aufweist, an dem der Fuß (308b) der zugeordneten Rippe (308) befestigt wird.

2. Triebwerkspylon (106) nach Anspruch 1, **dadurch gekennzeichnet, dass** der Befestigungsbereich (404) die Form einer Aussparung der Querwand (406) hat, in welcher der Fuß (308b) der zugeordneten Rippe (308) aufgenommen ist.

3. Triebwerkspylon (106) nach einem der Ansprüche 1 oder 2, **dadurch gekennzeichnet, dass** der Kopf (308a) einen Steg (410), der sich quer bezüglich des oberen Holms (302) erstreckt, und beiderseits des Stegs (410) eine mit dem Steg (410) fest verbundene Sohle (412a-b) umfasst, und dadurch, dass jede Sohle (412a-b) an einer Innenseite einer Seitenwand (302b-c) des oberen Holms (302) anliegt und an dieser Seitenwand (302b-c) befestigt ist.

4. Triebwerkspylon (106) nach einem der Ansprüche 1 bis 3, **dadurch gekennzeichnet, dass** der untere Holm (304) und die Schuhe (402) aus Metall hergestellt sind, und dadurch, dass der obere Holm (302) aus Verbundwerkstoffen hergestellt ist.

5. Triebwerkspylon (106) nach Anspruch 4, **dadurch gekennzeichnet, dass** der obere Holm (302) dafür ausgebildet ist, eine aerodynamische Außenverkleidung herzustellen.

6. Triebwerkspylon (106) nach einem der Ansprüche 1 bis 5, **dadurch gekennzeichnet, dass** eine Innenseite des freien Endes jeder Seitenwand (302b-c) des oberen Holms (302) an einer Außenseite des freien Endes einer Seitenwand (304b-c) des unteren Holms (304) anliegt, dadurch, dass auf der Höhe, wo eine Seitenwand (302b-c) des oberen Holms (302) eine Seitenwand (304b-c) des unteren Holms (304) überlagert, die Seitenwände (302b-c, 304b-c) von koaxialen Durchgangsbohrungen (501a-b) durchquert werden, und dadurch, dass die Befestigungsmittel (500) für jedes Paar von koaxialen Durchgangsbohrungen (501a-b) ein Schaftbefestigungsteil (502) umfassen, welches einen Schaft, der in die Durchgangsbohrungen (501a-b) eingesetzt wird, und einen Kopf an jedem Ende des Schaftes aufweist, um die Seitenwände (302b-c, 304b-c) sandwichartig einzuschließen.

7. Triebwerkspylon (106) nach einem der Ansprüche 1 bis 5, **dadurch gekennzeichnet, dass** das freie Ende jeder Seitenwand (302b-c) des oberen Holms (302) im Stumpfstoß an das freie Ende einer Seitenwand (304b-c) des unteren Holms (304) angeordnet ist, dadurch, dass das freie Ende jeder Seitenwand (302b-c, 304b-c) von Durchgangsbohrungen (601a-b) durchquert wird, dadurch, dass die Befestigungsmittel (600) einerseits für jedes Paar von im Stumpfstoß angeordneten Seitenwänden (302b-c, 304b-c) eine Stoßlasche (604) umfassen, die an einer Außenseite jeder Seitenwand (302b-c, 304b-c) des Paares anliegend angeordnet ist, wobei jede Stoßlasche (604) für jede Durchgangsbohrung (601a-b) des zugeordneten Paares eine mit der Durchgangsbohrung (601a-b) koaxiale komplementäre Durchgangsbohrung (603a-b) aufweist, und andererseits für jede Durchgangsbohrung (601a-b) ein Schaftbefestigungsteil (602), welches einen Schaft, der in die Durchgangsbohrung (601a-b) und die koaxiale komplementäre Durchgangsbohrung (603a-b) eingesetzt wird, und einen Kopf an jedem Ende des Schaftes aufweist, um die zugeordnete Stoßlasche (604) und die zugeordnete Seitenwand (302b-c, 304b-c) sandwichartig einzuschließen.

8. Triebwerkspylon (106) nach einem der Ansprüche 1 bis 5, **dadurch gekennzeichnet, dass** das freie Ende jeder Seitenwand (304b-c) des unteren Holms (304) mehrere Aufnahmen (704) aufweist, von denen jede eine Kontaktwand (706) aufweist, die im Wesentlichen senkrecht zur zugeordneten Seitenwand (302b-c) des oberen Holms (302) ist, dadurch, dass die Schmalseite des freien Endes jeder Seitenwand (302b-c) an den Kontaktwänden (706) der zugeordneten Aufnahmen (704) anliegend angeordnet ist, dadurch, dass jede Kontaktwand (706) eine Durchgangsbohrung (701b) aufweist, deren Achse im Wesentlichen parallel zur zugeordneten Seitenwand (302b-c) des oberen Holms (302) ist, dadurch, dass für jede Durchgangsbohrung (701b) die zugeordnete Seitenwand (302b-c) des oberen Holms (302) eine erste Bohrung (701a), deren Achse senkrecht zur Achse dieser Durchgangsbohrung (701b) ist, und eine zweite Bohrung (701c), die mit der Durchgangsbohrung (701b) koaxial ist und in die erste Bohrung (701a) mündet, aufweist, und dadurch, dass die Befestigungsmittel (700) für jede Durchgangsbohrung (701b) eine Hülsenmutter (702a), die in der ersten Bohrung (701a) aufgenommen ist, und eine Schraube (702b), deren Schaft nacheinander die Durchgangsbohrung (701b) und die koaxiale zweite Bohrung (701c) durchquert, um in die Hülsenmutter (702a) der zugeordneten ersten Bohrung (701a) eingeschraubt zu werden, umfassen.

9. Luftfahrzeug (10), welches einen Tragflügel (104), ein Turbostrahltriebwerk (102) und einen Triebwerkspylon (106) nach einem der vorhergehenden Ansprüche, der zwischen dem Tragflügel (104) und dem Turbostrahltriebwerk (102) befestigt ist, umfasst.

## Claims

1. Engine pylon (106) for mounting a jet engine (102) beneath a wing (104) of an aircraft (10), the engine pylon (106) comprising:
- an upper spar (302) having an inverted U-shaped profile with a roof (302a) and two lateral walls (302b-c) extending downwards from the roof (302a),
- a lower spar (304) having a U-shaped profile with a bottom (304a) and two lateral walls (304b-c) extending upwards from the bottom (304a), where each lateral wall (302b-c, 304b-c) of a spar (302, 304) has a free end extending until it comes into the vicinity of the free end of the lateral wall (304b-c, 302b-c) of the other spar (304, 302),
- fixing means for fixing the free end of a lateral wall (302b-c, 304b-c) of one spar (302, 304) to the free end of the lateral wall (304b-c, 302b-c) of the other spar (304, 302), and
- a plurality of ribs (308) distributed along the length of the lower spar (304) and housed between the upper spar (302) and the lower spar (304), where each rib (308) has a top end (308a) fixed to each lateral wall (302b-c) of the upper spar (302) and a bottom end (308b) fixed to the lower spar (304),
the engine pylon (106) being **characterized in that** it comprises, for each rib (308), a pad (402) housed in the lower spar (304) and secured thereto, and **in that** each pad (402) has a transverse wall (406) which extends transversely with respect to the lower spar (304) and has a fixing zone (404) at which the bottom end (308b) of the associated rib (308) is fixed.

2. Engine pylon (106) according to Claim 1, **characterized in that** the fixing zone (404) takes the form of a cavity in the transverse wall (406) in which cavity the bottom end (308b) of the associated rib (308) is housed.

3. Engine pylon (106) according to one of Claims 1 or 2, **characterized in that** the top end (308a) comprises a web (410) extending transversely with respect to the upper spar (302) and, on each side of the web (410), a flange (412a-b) secured to the web (410), and **in that** each flange (412a-b) bears against an internal face of a lateral wall (302b-c) of the upper spar (302) and is fixed to said lateral wall (302b-c).

4. Engine pylon (106) according to one of Claims 1 to 3, **characterized in that** the lower spar (304) and the pads (402) are made of metal and **in that** the upper spar (302) is made of composite materials.

5. Engine pylon (106) according to Claim 4, **characterized in that** the upper spar (302) is shaped to form an aerodynamic exterior fairing.

6. Engine pylon (106) according to one of Claims 1 to 5, **characterized in that** an internal face of the free end of each lateral wall (302b-c) of the upper spar (302) bears against an external face of the free end of a lateral wall (304b-c) of the lower spar (304), **in that**, in the region where a lateral wall (302b-c) of the upper spar (302) is superposed on a lateral wall (304b-c) of the lower spar (304), the lateral walls (302b-c, 304b-c) have coaxial through-bores (501a-b) passing through them, and **in that** the fixing means (500) comprise, for each pair of coaxial through-bores (501a-b), a shanked fastener (502) which has a shank that is inserted into said through-bores (501a-b) and a head at each end of the shank so as to sandwich the lateral walls (302b-c, 304b-c).

7. Engine pylon (106) according to one of Claims 1 to 5, **characterized in that** the free end of each lateral wall (302b-c) of the upper spar (302) is butted against the free end of a lateral wall (304b-c) of the lower spar (304), **in that** the free end of each lateral wall (302b-c, 304b-c) has through-bores (601a-b) passing through it, **in that** the fixing means (600) comprise, on the one hand, for each pair of butted-together lateral walls (302b-c, 304b-c) a fishplate (604) placed against an external face of each lateral wall (302b-c, 304b-c) of the pair, where each fishplate (604) has, for each through-bore (601a-b) of the associated pair, a complementary through-bore (603a-b) coaxial with said through-bore (601a-b) and, on the other hand, for each through-bore (601a-b) a shanked fastener (602) which has a shank that is inserted into the through-bore (601a-b) and into the coaxial complementary through-bore (603a-b) and a head at each end of the shank so as to sandwich the associated fishplate (604) and lateral wall (302b-c, 304b-c).

8. Engine pylon (106) according to one of Claims 1 to 5, **characterized in that** the free end of each lateral wall (304b-c) of the lower spar (304) has a plurality of housings (704) where each has a contact wall (706) roughly perpendicular to the associated lateral wall (302b-c) of the upper spar (302), **in that** the edge face of the free end of each lateral wall (302b-c) is positioned against the contact walls (706) of the associated housings (704), **in that** each contact wall (706) has a through-bore (701b) of which the axis is roughly parallel to the associated lateral wall (302b-c) of the upper spar (302), and **in that**, for each through-bore (701b), the associated lateral wall (302b-c) of the upper spar (302) has a first bore (701a) of which the axis is perpendicular to the axis of said through-bore (701b) and a second bore (701c) coaxial with said through-bore (701b) and opening into the first bore (701a), and **in that** the fixing means (700) comprise, for each through-bore (701b), a sleeve nut (702a) housed in the first bore (701a) and a screw (702b) of which the shank passes successively through the through-bore (701b), and the coaxial second bore (701c) to screw into the sleeve nut (702a) in the associated first bore (701a).

9. Aircraft (10) comprising a wing (104), a jet engine (102) and an engine pylon (106) according to one of the preceding claims, fixed between the wing (104) and the jet engine (102).
